# EUROPÄISCHE PATENTANMELDUNG

(11) **EP 0 711 624 A1**
(43) Veröffentlichungstag der Anmeldung: **15.05.1996**
(21) Anmeldenummer: 95113624.1
(22) Anmeldetag: 30.08.1995
(51) Int. Cl.: B23K 11/31

(54) **Verfahren und Schweissmaschine zum Widerstandsschweissen von stab- und blechförmigem Halbzeug**

(30) Priorität: 08.11.1994 DE 4439833
(71) Anmelder: WANZL METALLWARENFABRIK GMBH, D-89336 Leipheim (DE)
(72) Erfinder: Bauer, Klaus, D-73230 Kirchheim/Teck (DE); Schurr, Eberhard, D-89340 Leipheim (DE)

(57) **Zusammenfassung**

Die Erfindung betrifft ein Verfahren zum Widerstandsschweißen von stab- und blechförmigem Halbzeug, wobei sich das Verfahren einer Schweißmaschine (1) bedient, die mit Elektroden (8, 9) ausgestattet ist, die unter Aufbietung einer über die Elektroden (8, 9) auf das Halbzeug einwirkenden Anpreßkraft zum gleichzeitigen Verschweißen des Halbzeuges an mindestens zwei getrennt angeordneten Schweißstellen vorgesehen sind und wahlweise Fördermittel (21) aufweist, die während des Fertigungsprozesses zum Transport des Halbzeuges und/oder der aus dem Halbzeug hergestellten Teile bestimmt sind.
Es wird vorgeschlagen, zur Erzeugung der Anpreßkraft eine von wenigstens einem Antriebsmotor (11) ausgehende vorbestimmte Drehbewegung über mindestens einen als Rollengewindetrieb oder als Kugelgewindetrieb gestalteten Linearantrieb (13) in eine Hubbewegung umzusetzen und diese Hubbewegung auf die wenigstens eine Elektrode (9) zu übertragen.

## Beschreibung

Die Erfindung betrifft ein Verfahren und eine zur Durchführung dieses Verfahrens vorgesehene Schweißmaschine zum Widerstandsschweißen von stab- und blechförmigem Halbzeug, wobei die Schweißmaschine mit Elektroden ausgestattet ist, die unter Aufbietung einer über die Elektroden auf das Halbzeug einwirkenden Anpreßkraft zum gleichzeitigen Verschweißen des Halbzeuges an mindestens zwei getrennt angeordneten Schweißstellen vorgesehen sind und die Schweißmaschine wahlweise mit Fördermitteln ausgestattet ist, die während des Fertigungsprozesses zum Transport des Halbzeuges und/oder der aus dem Halbzeug hergestellten Teile bestimmt sind.

Bei bisher bekannten Schweißmaschinen dieser Art wird die Anpreßkraft für die bewegbaren Elektroden durch Druckluft, also pneumatisch, erzeugt. Dazu bedarf es eines enormen technischen Aufwandes, da Druckluftzylinder, Leitungen, Ventile, Drosseln, Öler, Wasserabscheider und große Mengen an Druckluft erforderlich sind. Neben diesem Nachteil bestehen weitere Nachteile darin, daß die Kosten zur Bereitstellung der Druckluft sehr hoch sind, daß beim Schweißen mit solchen Schweißmaschinen durch deren schlagartiges Arbeiten ein hoher Lärmpegel erzeugt wird, daß sich Schweißspritzer bilden und an den Schweißstellen gratartige Schweißbürsten entstehen können, die imstande sind, Verletzungen hervorzurufen und deshalb nach dem Schweißen entfernt werden müssen. Auch ist zu beobachten, daß mit Druckluft arbeitende Schweißmaschinen unmittelbar nach ihrem Ingangsetzen, solange sie noch kalt sind, ungenau arbeiten und deshalb nach einiger Zeit nachjustiert oder nachgestellt werden müssen. Dies läßt bei einer Serie von Teilen unterschiedliche Qualitäten entstehen. Schließlich müssen die zur Erzeugung der Anpreßkraft erforderlichen Teile regelmäßig gewartet und, falls erforderlich, erneuert werden.

Es ist Aufgabe der Erfindung, ein verbessertes Verfahren zum Widerstandsschweißen von stab- und blechförmigem Halbzeug aufzufinden und eine zur Durchführung dieses Verfahrens geeignete gattungsgemäße Schweißmaschine so weiterzuentwickeln, daß sich die eben geschilderten Nachteile vermeiden lassen.

Zur Lösung dieser Aufgabe wird ein Verfahren vorgeschlagen, bei dem zur Erzeugung der Anpreßkraft eine von wenigstens einem Antriebsmotor ausgehende vorbestimmte Drehbewegung über mindestens einen Linearantrieb in eine Hubbewegung umgesetzt und diese Hubbewegung auf wenigstens eine Elektrode übertragen wird.

Um dieses Verfahren durchführen zu können wird ferner vorgeschlagen, zur Erzeugung der Anpreßkraft wenigstens einen Linearantrieb und mindestens einen Antriebsmotor vorzusehen und dessen Antriebsbewegung auf den wenigstens einen Linearantrieb zu übertragen, wobei der wenigstens eine Linearantrieb mit mindestens einer Elektrode starr oder federnd verbunden ist.

Da sich der wenigstens eine Antriebsmotor durch modernste Steuerungseinrichtungen präzise anfahren und abstoppen läßt, ist es in vorteilhafter Weise nicht nur möglich, die Länge der Hubbewegungen für die wenigstens eine bewegbare Elektrode exakt einzuhalten, sondern es lassen sich auch die zum Schweißen erforderlichen Vorpreß-, Schweiß- und Nachpreßzeiten genauestens bestimmen. Dies wirkt sich nicht nur positiv beim Schweißen von aus Stahl gefertigten Teilen, sondern auch in äußerst günstiger Weise dann aus, wenn es gilt, Teile aus Aluminium zu verschweißen. Bekanntlich nimmt beim Schweißen von Aluminium dessen Härte und Zähigkeit ab Erreichen einer bestimmten Temperatur rapide ab. Versuche, aus Aluminium bestehende Teile mit herkömmlichen Schweißmaschinen zu schweißen, sind daher immer gescheitert, da die Schweißstellen total zusammengedrückt und somit unbrauchbar werden. Vorteilhaft ist ferner, daß man mit kürzeren Hüben und größeren Hubgeschwindigkeiten als bisher arbeiten kann. Dadurch lassen sich die Fertigungskosten der zu schweißenden Teile senken. Eine wesentliche Reduzierung der Fertigungskosten wird jedoch vor allem dadurch erreicht, daß für die Durchführung des Schweißverfahrens keine Druckluft mehr erforderlich ist. Es entfallen somit die hohen Kosten zur Herstellung der Druckluft ebenso wie die Kosten zur Bereitstellung und Wartung all jener Teile, die bisher zur Aufrechterhaltung eines auf pneumatischer Basis arbeitenden Fertigungsprozesses erforderlich waren. Auch das bekannte Schlagen der wenigstens einen bewegbaren Elektrode beim Schweißvorgang gehört der Vergangenheit an. Dadurch wird nicht nur der Schallpegel reduziert, sondern es läßt sich auch eine wesentliche Erhöhung der Standzeiten für die Elektroden erzielen. Ein weiterer Vorteil stellt sich schließlich dann ein, wenn die Verbindung zwischen dem wenigstens einen Linearantrieb und der mindestens einen bewegbaren Elektrode federnd oder stoßdämpfend gestaltet ist. Zum Schweißen wird dabei die Anpreßkraft zuerst durch den Linearantrieb erzeugt und über Federelemente an die Elektroden weitergegeben. Dabei legt die Mutter des Linearantriebes einen gewissen Hub zurück. Dieser Hub bewirkt das Vorpressen, wobei das weitere Anpressen beim Schweißvorgang und das anschließende Nachpressen zusätzlich durch die Federelemente erfolgt, die das Weichwerden der kurzfristig aufglühenden Schweißstellen ausnützen, um die zu verschweissenden Teile ohne Schlagwirkung in kürzester Zeit noch stärker zusammenzupressen. Da das Schweißen und Nachpressen unter Zuhilfenahme der Federelemente erfolgt, brauchen deshalb die wenigstens eine Elektrode mit Hilfe des Linearantriebes nicht mehr, wie bisher üblich, schlagartig auf die Schweißstelle aufgesetzt werden. Neben der bereits erwähnten Reduzierung des Lärmpegels wird dadurch auch die Bildung von lästigen Schweißspritzern und Schweißgraten vermieden.

Die Erfindung wird anhand eines Ausführungsbeispieles näher erläutert, wobei zwei weitere Alternativen angedeutet werden. Es zeigt
Fig. 1 eine Schweißmaschine in schematischer Darstellung;
Fig. 2 die federnde Verbindung zwischen dem Linearantrieb und einer Elektrode, sowie
Fig. 3 bis 5 einen Schweißvorgang anhand von drei Diagrammen dargestellt.

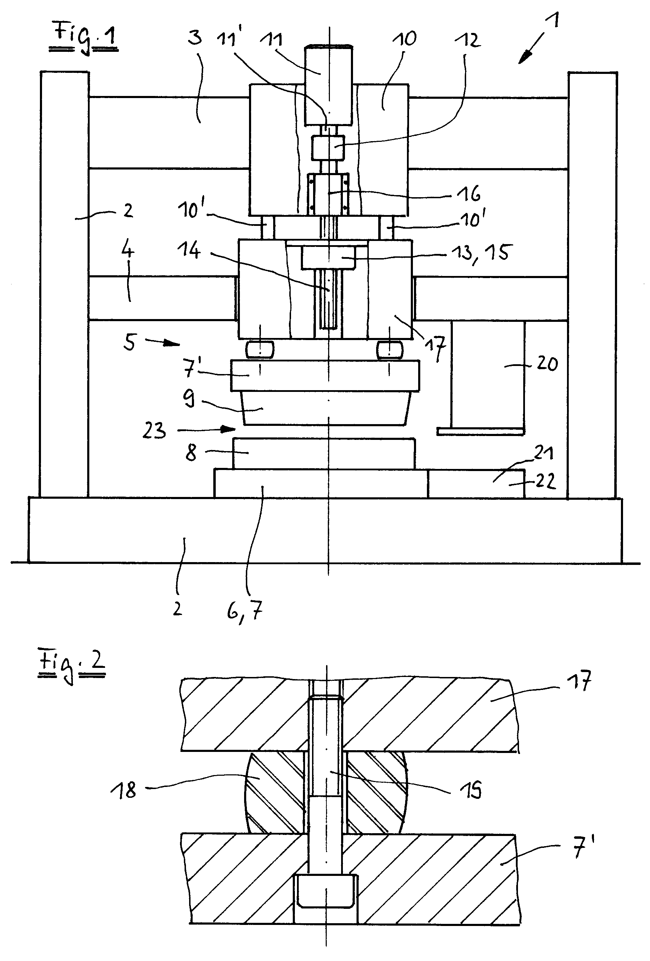

Die in Fig. 1 dargestellte Schweißmaschine 1 steht stellvertretend für sämtliche Schweißmaschinen 1, die auf Basis der Widerstandsschweißung im Sinne der Erfindung herstellbar sind. Alle diese Schweißmaschinen 1 sind in bekannter Weise mit einem Rahmen 2 ausgestattet, an dem die durch eine nicht näher dargestellte Steuerung ansteuerbare Schweißeinrichtung 5 befestigt ist. Als Steuerung ist z.B. ein 32 Bit-Risc-Prozessor, "Fagor 8050", denkbar. Die Schweißeinrichtung 5 weist in bekannter Weise wenigstens zwei Elektroden 8, 9 auf, die gegeneinander gerichtet und bei Nichtgebrauch in einem Abstand zueinander angeordnet sind, um im entstandenen Zwischenraum 23 stab- und/oder blechförmiges Halbzeug oder dergleichen zum Zwecke des Verschweißens aufzunehmen. Die Schweißeinrichtung 5 ist so ausgelegt und gestaltet, daß mit ihr ein gleichzeitiges Schweißen an mindestens zwei getrennt, also in einem Abstand angeordneten Schweißstellen möglich ist. Bekannte Drahtgitterroste sind als Halbzeuge dafür typische Anwendungsfälle. Die wenigstens eine untere Elektrode 8 ruht, gehalten von einem Elektrodenhalter 7, ortsfest auf einer mit dem Rahmen 2 verbundenen Basis 6, die ebenfalls ortsfest oder aber anheb- und absenkbar angeordnet sein kann. Im oberen Bereich der Schweißmaschine ist an einer zum Rahmen 2 gehörenden Querverbindung 3 eine Trageinrichtung 10 befestigt, an der wenigstens ein Antriebsmotor 11 und mindestens ein Linearantrieb 13 angeordnet sind. Der Antriebsmotor 11 ist mit dem Linearantrieb 13 bevorzugt über eine Kupplung 12 verbunden. Der Linearantrieb 13, z.B. ein Rollen- oder Kugelgewindetrieb der Bauserie "Transrol" der Firma SKF weist beispielsweise eine von nicht dargestellten Gewinderollen umgebene Spindel 14 auf, wobei die Gewinderollen gegenüber der Spindel 14 und einer Mutter 15 drehbar abgestützt sind. Die Gewinderollen sind innerhalb der Mutter 15 angeordnet und die Spindel 14 durchdringt wiederum die Mutter 15. Der wenigstens eine Antriebsmotor 11 ist als Servomotor, z.B. "Yaskawa USAGED-09A21 (0,85 kW, 5,39 Nm)", gestaltet, der in bekannter Weise in der Lage ist, eine vorbestimmte Drehzahl exakt auszuführen. Die Spindel 14 des Linearantriebes 13 und die Antriebswelle 11' des Antriebsmotors 11 sind im Beispiel auf einer gemeinsamen Achse 16 angeordnet, die bevorzugt senkrecht verläuft. Das obere Ende der Spindel 14 mündet in die Kupplung 12, während die Mutter 15 des Linearantriebes 13 ortsfest mit einem gegen Verdrehen gesicherten, über Führungen 10' mit der Trageinrichtung 10 verbundenen und am Rahmen 2, etwa an einer weiteren Querverbindung 4 bewegbar geführten Tragblock 17 verbunden ist. Die Anordnung des Tragblockes 17 am Rahmen 2 oder an der Querverbindung 4 ist nicht näher dargestellt. Mit dem Tragblock 17 ist ein die wenigstens eine obere Elektrode 9 tragender Elektrodenhalter 7' entweder starr oder bevorzugt federnd verbunden. Die federnde Verbindung ist in Fig. 2 näher beschrieben. Die Schweißmaschine 1 kann mit nicht näher dargestellten, jedoch durch mit den Bezugsziffern 20 und 21 gekennzeichnete Fördermittel ausgestattet sein, die während des Fertigungsprozesses zum Transport des Halbzeuges und/oder der aus dem Halbzeug hergestellten Teile bestimmt sind, wobei das mit 21 bezeichnete Fördermittel ein Vorschub sein kann, der, ebenfalls einen Antriebsmotor 22 aufweisend, zum taktweisen Weitertransport beispielsweise eines zu schweißenden Gitterrostes vorgesehen ist. Der Antriebsmotor 22 wird dabei durch die Steuerung so beeinflußt, daß er beim taktweisen Weitertransport immer dann eingeschaltet wird, wenn ein Schweißvorgang gerade beendet ist und immer dann zum Stillstand gebracht wird, wenn ein neuer Schweißvorgang beginnt.

Fig. 2 zeigt ausschnittweise die zwischen dem Tragblock 17 und dem Elektrodenhalter 7' bestehende federnde Verbindung. Zwischen dem Tragblock 17 und dem Elektrodenhalter 7' sind aus Gummi oder ähnlich federndem oder elastischem Werkstoff hergestellte Federelemente 18 vorgesehen, die von Schrauben 19 durchdrungen sind, welche ausgehend von dem Elektrodenhalter 7' nach oben gerichtet und mit dem Tragblock 17 verschraubt sind. Die Federelemente 18, die auch durch bekannte Tellerfedern oder Druckfedern gebildet sein können, sind dabei durch die Schrauben 19 leicht vorgespannt.

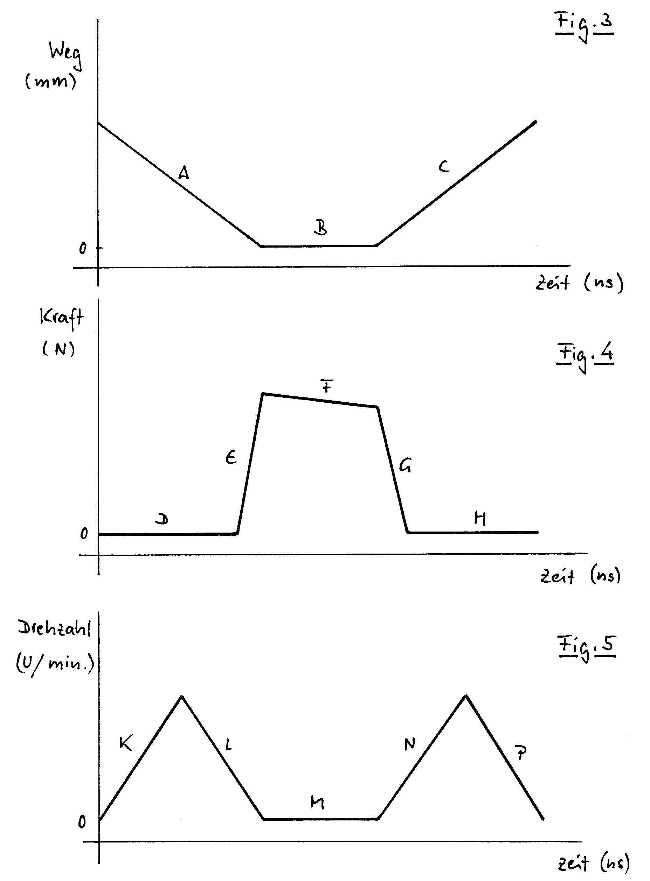

Fig. 3 zeigt in einem ersten Diagramm den in einer bestimmten Zeit zurückgelegten Weg der oberen Elektrode 9 während eines Schweißvorganges.
A: Die obere Elektrode 9 befindet sich in einem Abstand zum verschweißenden Halbzeug und wird auf das Halbzeug abgesenkt.
B: Schweißvorgang. Das oder die Halbzeuge werden verschweißt.
C: Anheben der oberen Elektrode in die Ausgangslage.

Fig. 4 zeigt in einem weiteren Diagramm die Werte der zum Schweißen aufzubringenden Anpreßkraft der oberen Elektrode 9 während eines Schweißvorganges.
D: Anpreßkraft 0 beim Absenken der oberen Elektrode 9.
E: Aufsetzen der oberen Elektrode 9 auf das Halbzeug und Aufbau der Anpreßkraft.
F: Schweißvorgang. Anpreßdruck läßt durch das Weicherwerden des Halbzeugwerkstoffes etwas nach.
G: Abbau des Anpreßdruckes und Beginn des Anhebens der oberen Elektrode 9.
H: Anheben der oberen Elektrode 9. Anpreßdruck ist Null.

Anhand eines Drehzahl-Zeit-Diagrammes zeigt Fig. 5 den Verlauf der Drehzahl des Antriebsmotors 11 und damit auch der Spindel 14.
K: Drehzahl von 0 auf n. Absenken der oberen Elektrode 9.
L: Drehzahl von n auf 0. Weiteres Absenken und Aufsetzen der oberen Elektrode 9 auf das Halbzeug.
M: Schweißvorgang. Drehzahl ist Null.
N: Drehzahl 0 auf n. Obere Elektrode 9 wird vom Halbzeug abgehoben.
P: Beginn eines neuen Schweißvorganges. Wie K.

Die Funktion der Schweißmaschine wird unter Bezugnahme auf die Figuren 1 bis 5 anhand eines Schweißvorganges nochmals näher beschrieben. Zwischen den Elektroden 8, 9 angeordnet befinden sich die zu verschweißenden, nicht näher dargestellten Halbzeuge oder Teile. Durch Ansteuern des Antriebsmotors 11 wird dessen Antriebswelle 11' in eine exakt vorbestimmte Drehbewegung versetzt. Die Spindel 14 des Linearantriebes 13 übernimmt diese Drehbewegung. Da die Spindel 14 in ihrer Lage unveränderbar gelagert ist, wandert durch die Drehbewegung der Spindel 14 die Mutter 15 des Linearantriebes 13 und damit der mit ihr verbundene Tragblock 17 nach unten. Die Drehbewegung des Antriebsmotors 11 und damit die der Spindel 14 wird somit über die Mutter 15 in erfindungswesentlicher Weise in eine Hubbewegung umgesetzt. Die Länge des Hubes läßt sich durch die exakte Festlegung der Anzahl der Umdrehungen der Spindel 14 ebenfalls äußerst genau festlegen. Die Länge des Hubes ist jedenfalls so gewählt, daß die am Tragblock 17 angeordnete wenigstens eine Elektrode 9 gegen die zu verschweißenden Teile gedrückt wird. Durch diese Anpreßkraft werden auch die leicht vorgespannten Federelemente 18 noch etwas weiter zusammengepreßt. Anschließend wird der Antriebsmotor 11 abgeschaltet und der Tragblock 17 verbleibt in der jetzt erreichten tiefsten Lage. Dies ist die Phase des Vorpressens. Durch Anlegen einer Spannung erfolgt anschließend in bekannter Weise das Verschweißen der Teile. Beim Schweißvorgang wird durch die erfolgte Erhitzung an der Schweißstelle das Material plastischer mit der Folge, daß sich die unter Vorspannung stehenden Federelemente 18 teilweise entspannen können, daher ihre Ausdehnung vergrößern und somit den Elektrodenhalter 7' mit der wenigstens einen Elektrode 9 um eine minimale Wegstrecke weiter nach unten drücken. Dies geschieht in der Phase des Schweißens und des Nachpressens. Nach dem Ende der Nachpreßzeit wird der Antriebsmotor 11 erneut angesteuert, jedoch so, daß die Drehbewegung seiner Antriebswelle 11' nunmehr umgekehrt verläuft, so daß durch die sich nun entgegengesetzt drehende Spindel 14 die Mutter 15 und damit der Tragblock 17 mit der wenigstens einen Elektrode 9 nach oben wandert und die Anpreßkraft aufgehoben ist. Anschließend wird der Antriebsmotor 11 abgeschaltet, das verschweißte Teil entnommen, neue Teile eingelegt und ein neuer Schweißvorgang kann beginnen.

Es bleibt zu erwähnen, daß pro Schweißmaschine 1 mehr als nur ein Antriebsmotor 11 und mehr als nur ein Linearantrieb 13 vorgesehen sein können, die sowohl synchron als auch asynchron geschaltet und ansteuerbar sein können. Ferner ist es möglich, zwischen dem Antriebsmotor 11 und dem Linearantrieb 13 Mittel vorzusehen, z.B. Zahnriemen, Zahnräder usw., die, z.B. nach Art eines Getriebes, eine Über- oder eine Untersetzung der Drehzahlen der Spindel 14 und dem Antriebsmotor 11 entstehen lassen. In diesen Fällen liegen die Spindel 14 des Linearantriebes 13 und die Antriebswelle 11' des Antriebsmotors 11 nicht auf einer gemeinsamen Achse 16. Schließlich ist festzuhalten, daß jede der sich gegenüberstehenden Elektroden 8, 9 bewegbar angeordnet sein können, also im Gegensatz zu dem in Fig. 1 beschriebenen Beispiel, bei dem nur die wenigstens eine obere Elektrode 9 bewegbar ist, zangenartig auf die zu verschweißenden Teile zubewegbar sind. In diesem Falle müssen die Elektroden 8, 9 durch sich gegenüberliegende Linearantriebe 13 bewegt werden. Auch können die Tragblöcke 17 und die Elektrodenhalter 7,7' ebenfalls durch Federelemente 18 federnd verbunden sein. Beim Schweißen von Drahtgitterrosten wird man die Elektroden 8,9, wie aus Fig. 1 ersichtlich, als sogenannte Balkenelektroden gestalten.

## Patentansprüche

1. Verfahren zum Widerstandsschweißen von stab- und blechförmigem Halbzeug, wobei sich das Verfahren einer Schweißmaschine (1) bedient, die mit Elektroden (8,9) ausgestattet ist, die unter Aufbietung einer über die Elektroden (8, 9) auf das Halbzeug einwirkenden Anpreßkraft zum gleichzeitigen Verschweißen des Halbzeuges an mindestens zwei getrennt angeordneten Schweißstellen vorgesehen sind und wahlweise Fördermittel (21) aufweist, die während des Fertigungsprozesses zum Transport des Halbzeuges und/oder der aus dem Halbzeug hergestellten Teile bestimmt sind, dadurch **gekennzeichnet,** daß zur Erzeugung der Anpreßkraft eine von wenigstens einem Antriebsmotor (11) ausgehende vorbestimmte Drehbewegung über mindestens einen als Rollengewindetrieb oder als Kugelgewindetrieb gestalteten Linearantrieb (13) in eine Hubbewegung umgesetzt und diese Hubbewegung auf die wenigstens eine Elektrode (9) übertragen wird.

2. Verfahren nach Anspruch 1, dadurch **gekennzeichnet,** daß die Anpreßkraft durch den mindestens einen Linearantrieb (13) und durch dem Linearantrieb (13) nachgeschaltete Federelemente (18) erzeugt wird, die durch die Hubbewegung zusammengepreßt werden und sich beim Schweißvorgang teilweise entspannen.

3. Verfahren nach Anspruch 1 oder 2, dadurch **gekennzeichnet,** daß zum Aufleben der Anpreßkraft die vom wenigstens einen Antriebsmotor (11) ausgehende vorbestimmte Drehbewegung der Antriebswelle (11') entgegengesetzt zu der zur Erzeugung der Anpreßkraft erforderlichen Drehbewegung verläuft.

4. Verfahren nach einem der Ansprüche 1 bis 3, dadurch **gekennzeichnet,** daß die Drehzahl des Antriebsmotors (11) während des Schweißvorganges (B, F, M) Null beträgt.

5. Schweißmaschine zur Durchführung des Verfahrens gemäß den Ansprüchen 1 bis 4, dadurch **gekennzeichnet,** daß zur Erzeugung der Anpreßkraft wenigstens ein als Rollengewindetrieb oder als Kugelgewindetrieb gestalteter Linearantrieb (13) und mindestens ein Antriebsmotor (11) vorgesehen ist, dessen Antriebsbewegung auf den wenigstens einen Linearantrieb (13) übertragen wird, wobei der wenigstens eine Linearantrieb (13) mit mindestens einer Elektrode (9) starr oder federnd verbunden ist.

6. Schweißmaschine nach Anspruch 5, dadurch **gekennzeichnet,** daß der wenigstens eine Antriebsmotor (11) als Servomotor gestaltet ist.

7. Schweißmaschine nach Anspruch 5 oder 6, dadurch **gekennzeichnet,** daß die Spindel (14) des Linearantriebes (13) und die Antriebswelle (11') des Antriebsmotors (11) entweder auf einer gemeinsamen Achse (16) oder auf getrennten Achsen angeordnet sind.

8. Schweißmaschine nach einem der Ansprüche 5 bis 7, dadurch **gekennzeichnet,** daß die Mutter (15) des Linearantriebes (13) ortsfest mit einem bewegbar am Rahmen (2) der Schweißmaschine (1) angeordneten Tragblock (17) verbunden ist, der wenigstens eine Elektrode (9) trägt.

9. Schweißmaschine nach einem der Ansprüche 5 bis 8, dadurch **gekennzeichnet,** daß der Tragblock (17) einen Elektrodenhalter (7') aufweist, der mit dem Tragblock (17) über Federelemente (18) verbunden ist.

10. Schweißmaschine nach einem der Ansprüche 5 bis 9, dadurch **gekennzeichnet,** daß die Federelemente (18) aus Gummi oder ähnlich federndem Werkstoff hergestellt oder durch Tellerfedern oder Druckfedern gestaltet sind.

11. Schweißmaschine nach einem der Ansprüche 5 bis 10, dadurch **gekennzeichnet,** daß die Federelemente (18) von Schrauben (19) durchdrungen sind, durch die der Tragblock (17) und der Elektrodenhalter (7') verbunden sind.

12. Schweißmaschine nach einem der Ansprüche 5 bis 11, dadurch **gekennzeichnet,** daß mehr als ein Antriebsmotor (11) und mehr als ein Linearantrieb (13) vorgesehen sind, die synchron oder asynchron ansteuerbar und geschaltet sein können.

13. Schweißmaschine nach einem der Ansprüche 5 bis 12, dadurch **gekennzeichnet,** daß die Elektroden (8, 9) durch je einen Linearantrieb (13) bewegbar angeordnet sind.

14. Schweißmaschine nach einem der Ansprüche 5 bis 13, dadurch **gekennzeichnet,** daß das Fördermittel (21) als Vorschub vorgesehen ist, der, einen Antriebsmotor (22) aufweisend, zum taktweisen Weitertransport eines zu schweißenden Gegenstandes, z.B. eines Gitterrostes, bestimmt ist.
